# EUROPÄISCHE PATENTSCHRIFT

(11) **EP 3 024 613 B1**
(45) Veröffentlichungstag und Bekanntmachung des Hinweises auf die Patenterteilung: **08.06.2022**
(21) Anmeldenummer: 14741862.8
(22) Anmeldetag: 17.07.2014
(51) Int. Cl.: B23C 3/32

(54) **VERFAHREN UND VORRICHTUNG ZUR HERSTELLUNG EINES HOHLRAUMES IN EINEM STATOR EINER EXZENTERSCHNECKENPUMPE**
METHOD AND DEVICE FOR PRODUCING A CAVITY IN A STATOR OF A PROGRESSIVE CAVITY PUMP
PROCÉDÉ DE RÉALISATION D'UNE CAVITÉ DANS UN STATOR D'UNE POMPE À VIS EXCENTRIQUE

(30) Priorität: 23.07.2013 DE 102013107884
(43) Veröffentlichungstag der Anmeldung: 01.06.2016
(73) Patentinhaber: Daunheimer, Ralf, 46514 Schembeck (DE)
(72) Erfinder: Daunheimer, Ralf, 46514 Schembeck (DE)
(74) Vertreter: Tarvenkorn, Oliver
(86) Internationale Anmeldenummer: PCT/EP2014/065458
(87) Internationale Veröffentlichungsnummer: WO 2015/011030

(56) Entgegenhaltungen:
- EP-A2- 0 451 131
- WO-A1-2011/095823
- DE-A1- 1 942 050
- DE-A1- 3 724 023
- DE-C1- 3 723 133
- US-A- 2 189 867
- US-A1- 2003 102 139
- DATABASE WPI Week 201147 Thomson Scientific, London, GB; AN 2011-H79828 XP002731210, -& CN 201 848 585 U (LI B) 1. Juni 2011 (2011-06-01)

## Beschreibung

Die Erfindung betrifft ein Verfahren zur Herstellung eines Hohlraumes in einem Stator einer Exzenterschneckenpumpe, bei dem mit einem Werkzeug im Inneren eines Statorrohlings Material abgetragen wird mit den Merkmalen des Oberbegriffs des Anspruchs 1

Zudem betrifft die Erfindung eine Vorrichtung zur Durchführung des Verfahrens.

Verfahren der eingangs genannten Art sind aus dem Stand der Technik bekannt.

Exzenterschneckenpumpen werden unter anderem zum kontinuierlichen Fördern von zähflüssigen Fluiden eingesetzt. Sie weisen einen Stator und einen drehbar darin gelagerten, schraubenförmig gewundenen Rotor auf, sodass bei der Herstellung eines Stators für eine Exzenterschneckenpumpe ein schraubenförmig gewundener Hohlraums mit einer entsprechenden Innenwandstruktur in den Statorrohling eingearbeitet wird.

Ein herkömmliches Verfahren zur Herstellung eines Stators sieht vor, dass zunächst ein Statorrohling angefertigt wird, der anschließend zur Ausbildung einer gewünschten Innenwandungsstruktur beispielsweise mechanisch bearbeitet wird. Eine solche mechanische Bearbeitung wird umso schwieriger, je größer die axiale Länge des herzustellenden Stators ist, insbesondere da herkömmliche Bearbeitungseinrichtungen nicht in der Lage sind, die bei der Bearbeitung auftretenden Querkräfte aufzufangen, ohne dass es zu einer elastischen Verformung der Bearbeitungseinrichtungen quer zu ihrer Längserstreckung kommt. Durch diese Verformungen ist jedoch eine exakte Bearbeitung von Statorrohlingen nicht immer gewährleistet.

Weitere Methoden zur Herstellung von Statoren für Exzenterschneckenpumpen sind elektrische bzw. elektrochemische Abtragungsverfahren wie beispielsweise die Elektroerosion bzw. die elektrochemische Erodierung. Im Rahmen dieser Methoden wurden insbesondere Statoren aus metallischen Werkstoffen hergestellt. Bei der elektrochemischen Erodierung tritt jedoch eine zunehmende Erwärmung auf, wodurch es zu einer unerwünschten konischen Bohrung nach dem Abkühlungsprozess kommt.

Ein wesentlicher Nachteil, der mit sämtlichen herkömmlichen Verfahren zur Herstellung eines Stators für eine Exzenterschneckenpumpe verbunden ist, ist darin zu sehen, dass nur relativ kurze Statoren hergestellt werden können bzw. für einen für eine Exzenterschneckenpumpe ausreichend langen Stator mehrere Statorsegmente zusammengesetzt werden müssen, was wiederum kostenintensiv ist und einen zusätzlichen konstruktiven Aufwand erfordert.

DE 37 23 133 C1 offenbart eine Konfiguration, bei der mehrere Wellen vorgesehen sind, die zwar teilweise exzentrisch, aber sämtlich parallel zueinander ausgerichtet. Durch die notwendigen Lagerungen der Wellen und den Kardanantrieb der Antriebswelle des Fräswerkzeugs ergibt sich ein großer Platzbedarf, so dass Statoren mit kleinem Durchmesser damit nicht herstellbar sind.

DE 1 942 050 A1 offenbart ein Verfahren zur Herstellung von Werkstücken mit trochoidem Querschnitt.

Es ist deshalb Aufgabe der Erfindung, ein Verfahren der eingangs genannten Art derart weiterzuentwickeln, das im Rahmen eines Fertigungsganges die Herstellung eines prinzipiell nahezu unbegrenzt langen Stators aus einem Material wie zum Beispiel Metall, Kunststoff etc. ermöglicht ist.

Diese Aufgabe wird durch ein Verfahren mit den Merkmalen des Anspruchs 1 gelöst. Vorteilhafte Ausgestaltungen der Erfindung ergeben sich aus den Unteransprüchen. Die Erfindung sieht vor, dass das Werkzeug innerhalb des Statorrohlings eine durch eine eine Antriebswelle des Werkzeugs als erster Welle,rotierende Bewegung sowie eine um eine Lagerwelle für die Antriebswelle als zweiter Welle rotierende, exzentrische Bewegung vollzieht, wobei der Statorrohling und das Werkzeug zudem axial gegeneinander bewegt werden.

Eine grundlegende Idee der Erfindung ist es, einen zu der exzentrischen Bewegung eines in einer Exzenterschneckenpumpe befindlichen Rotors korrespondierenden Hohlraum durch eine exzentrische Bohrung auszubilden. Dadurch, dass das Werkzeug innerhalb des Stators eine durch die Antriebswelle rotierende Bewegung und der Statorrohling und das Werkzeug gegeneinander bewegt werden, wird zudem bewirkt, dass das Werkzeug kontinuierlich innerhalb des Statorrohlings geführt wird und somit ein stetiger Materialabtrag stattfindet. Das vorzugsweise mehrschneidige Werkzeug, das zweckmäßigerweise vier bis fünf Schneiden aufweist, führt dabei eine Schlagbewegung aufgrund des Vorschubs auf.

In einer Exzenterschneckenpumpe befinden sich der Rotor und der Stator vorzugsweise in einer Stahlhülse. Die Drehachse des Rotors ist dabei nicht die Symmetrieachse der Hülse. Der Rotor dreht sich vielmehr "exzentrisch". Durch die exzentrische Bewegung des Werkzeugs und die relative Bewegung des Statorrohlings und des Werkzeugs zueinander wird der zu der exzentrischen Bewegung des Rotors korrespondierende Hohlraum gebildet. Der Vorteil der Erfindung liegt also insbesondere darin, dass aus einem einzigen Materialstück durch die Bohrung sehr lange Statoren hergestellt werden können.

Ein weiterer Vorteil der Erfindung ist es, dass das Werkzeug durch eine Überlagerung von mindestens zwei zusammenwirkenden Wellen bewegt wird, um eine bestimmte Bearbeitung innerhalb eines Statorrohlings vorzunehmen. Somit kann auch ein für eine Bearbeitung erforderlicher komplexer Bewegungsablauf des Werkzeugs in zwei weniger komplexe Bewegungen zerlegt werden, welche von den zusammenwirkenden Wellen ausgeführt werden. Hierdurch lassen sich auch relativ einfache Antriebseinrichtungen zum Antreiben der Wellen verwenden. Bei dem erfindungsgemäßen Verfahren ist es zudem möglich, Antriebseinrichtungen bzw. Antriebe einzusetzen, welche weniger leistungsstark ausgelegt sind, was ebenfalls ein Kostenvorteil gegenüber anderen Herstellungsmethoden ist.

Es hat sich herausgestellt, dass die Steigung des Stators durch eine Änderung des Drehzahlverhältnises zwischen Statorrohling und der exzentrischen Bewegung des Werkzeugs erzeugt wird. Eine vorteilhafte Ausgestaltung der Erfindung sieht daher vor, dass der Statorrohling eine rotierende Bewegung vollzieht. Eine rotierende Bewegung des Statorrohlings stellt die Voraussetzung für die Einstellung eines Drehzahlverhältnisses zwischen Stator und der exzentrischen Bewegung des Werkzeugs dar.

Eine praktikable Variante der Erfindung sieht vor, dass das Werkzeug während einer vollständigen Drehung des Statorrohlings mindestens zwei vollständige exzentrische Bewegungen vollzieht. Dieses Drehzahlverhältnis hat zur Folge, dass neben einem Langloch innerhalb des Statorrohlings auch hypozykloidischen Ausformungen innerhalb des Statorrohlings erzeugt werden können, die auch den für eine Exzenterschneckenpumpe typischen Schneckenverlauf umfassen können.

Zweckmäßigerweise werden die Bewegungen der Lagerwelle innerhalb einer Außenwelle als Führungsrohr vollzogen. Vorzugsweise kann die Lagerwelle im Führungsrohr dabei rotieren.

Um einen stetigen Materialabtrag innerhalb des Statorrohlings sicherzustellen, sieht eine weitere vorteilhafte Ausgestaltung der Erfindung vor, dass das Werkzeug im Inneren des Statorrohlings am Statorrohling entlang geführt wird. Hierzu dient vorzugsweise auch, dass der Statorrohling und/oder das Werkzeug eine axiale Vorschubbewegung vollzieht. Dadurch, dass der Statorrohling eine axiale Vorschubbewegung vollzieht, ist zudem gewährleistet, dass eine Symmetrieachse gegeben ist, sodass fortlaufend eine exzentrische Bewegung des Werkzeugs ausgeführt werden kann. Zweckmäßigerweise verlaufen das Führungsrohr und die Lagerwelle parallel zueinander.

Vorteilhafterweise wird die exzentrische Umdrehung des Werkzeugs von einer Exzenterwelle angetrieben. Denkbar ist aber auch, dass die exzentrische Umdrehung des Werkzeugs von einer rotierbaren Welle, die außermittig der Symmetrieachse des Statorrohlings angeordnet ist, angetrieben wird.

Für den Antrieb der ersten und zweiten Welle können hierfür spezifisch eingerichtete Antriebe vorgesehen sein.

Schließlich sieht die Erfindung auch eine Vorrichtung für die Durchführung des Verfahrens mit den Merkmalen des Anspruchs 7 vor.

Die erfindungsgemäße Vorrichtung weist durch eine mit ihrem Antriebsende an einen ersten Antrieb koppelbare Lagerwelle, die mittels des ersten Antriebs um ihre Längsachse drehbar ist, eine mit ihrem Antriebsende an einen zweiten Antrieb koppelbare Antriebswelle, die mittels des zweiten Antriebs um ihre Längsachse formschlüssig und relativ zur Lagerwelle drehbar in einer Bohrung der Lagerwelle angeordnet ist, und durch ein Bearbeitungswerkzeug, welches drehfest mit dem in den Hohlkörper einführbaren Bearbeitungsende der Antriebswelle verbunden ist und über diese rotierend um die Längsachse der Antriebswelle antreibbar ist, auf. Die Längsachse der Antriebswelle ist in einem Punkt schneidet mit bzw. windschief zu der Längsachse der Lagerwelle angeordnet.

Die Erfindung wird im Folgenden anhand der in den beiliegenden Figuren gezeigten Ausführungsbeispiele näher erläutert. Die Figuren zeigen in schematischer Darstellung:
- Fig. 1a bis d: mehrere Schnittansichten für einen Bewegungsablauf bei dem Verfahren gemäß der Erfindung;
- Fig. 1e: eine perspektivische Darstellung eines Ausführungsbeispiels für eine erfindungsgemäße Vorrichtung und
- Fig. 2a bis 5b: verschiedene Bearbeitungszustände der erfindungsgemäßen Vorrichtung aus Fig. 1e

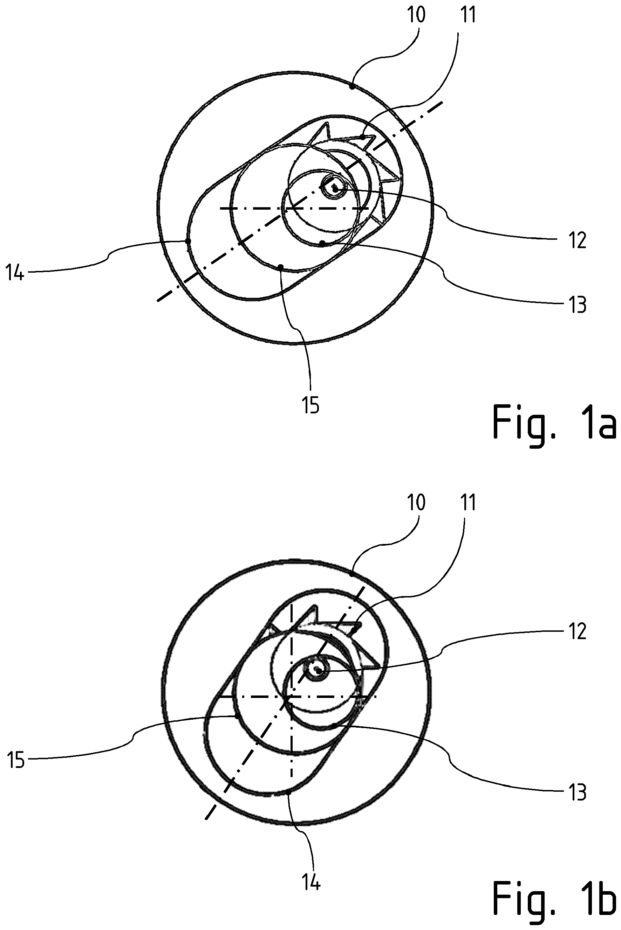

Die Figuren 1a bis 1d verdeutlichen jeweils in einer Schnittansicht Momentaufnahmen des Bewegungsablaufes eines Werkzeugs11 innerhalb eines Statorrohlings 10 zur Herstellung eines Stators für eine Exzenterschneckenpumpe.

Für die Herstellung des Stators ist das Werkzeug11 vorgesehen, das in der in den Fig. 1a bis 1d gezeigten Ausführungsform der Erfindung als Fräsvorrichtung vorliegt. Weiterhin ist im Rahmen des erfindungsgemäßen Verfahrens eine erste Welle als Antriebswelle 12 vorgesehen, durch die das rotierende Werkzeug 11 innerhalb des Statorrohlings 10 angetrieben wird.

Eine weitere Bewegung des Werkzeugs 11 liegt in Form einer exzentrischen Bewegung vor, und zwar als Rotation um eine zweite Welle als Lagerwelle 13, deren Mittelachse nicht mit der Symmetrieachse des Statorrohlings 10 übereinstimmt.

Weitere Bewegungen vollzieht der Statorrohling 10 und zwar in Form einer axialen Vorschubbewegung und einer rotierenden Bewegung. Sowohl für die Bewegungen des Statorrohlings 10 als auch für die um die Antriebswelle 12 rotierende Bewegung des Werkzeugs 11 sowie für die um die Lagerwelle 13 rotierende, exzentrische Bewegung des Werkzeugs 11 sind entsprechende, in den Fig. 1a bis 1d nicht gezeigte Antriebe vorgesehen.

Das Verfahren beginnt damit, dass der Statorrohling 10 und das rotierende Werkzeug 11 gegeneinander bewegt werden und gleichzeitig das rotierende Werkzeug 11 innerhalb des Statorrohlings 10 durch die Antriebswelle 12 angetrieben wird und die exzentrische Bewegung um die Lagerwelle 13 (Exzenterwelle) vollzieht. Durch die einsetzende Vorschubbewegung des Statorrohlings 10 kommt es dazu, dass das Werkzeug 11 innerhalb und längs des Statorrohlings 10 geführt wird, was mit einem Materialabtrag innerhalb des Statorrohlings 10 einhergeht. Hierdurch wird innerhalb des Statorrohlings 10 ein Hohlraum 14 gebildet, der im Querschnitt die für eine Exzenterschneckenpumpe typische Form eines Langlochs aufweist.

Wie die Fig. 1a bis 1d weiter veranschaulichen, vollzieht das Werkzeug 11 während der Drehung des Statorrohlings 10 exzentrische Bewegungen. Hierdurch kommt es bei einer gegebenen axialen Vorschubbewegung des Statorrohlings 10 zu dem für einen Stator einer Exzenterschneckenpumpe typischen schraubenförmigen Hohlraum 14, der sich in den Fig. 1a bis 1d in den im Querschnitt gezeigten Langlöchern widerspiegelt.

Die Bewegungen des Statorrohlings 10 und des Werkzeugs 11 sind aufeinander abgestimmt. Zu Beginn des Verfahrens befindet sich das Werkzeug 11 zentrisch, d. h. mittig einer Außenwelle 15 als Führungsrohr 15 und mittig des Statorrohlings 10. Eine im Rahmen der exzentrischen Bewegung vollzogene 90°-Drehung des Werkzeugs 11 führt dazu, dass sich der Statorrohling 10 bei seiner Rotationsbewegung um 45° gedreht hat. Eine Statorrohlingdrehung um 135° entspricht wiederum einer Drehung des Werkzeugs 11 um die Lagerwelle 13 um 270°.

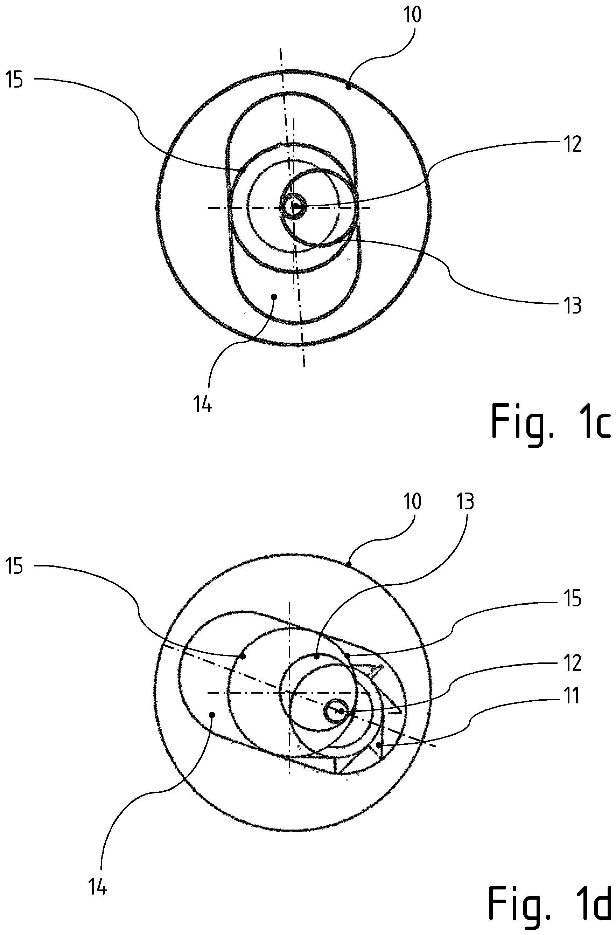

Eine weitere Drehung des Statorrohlings 10 um insgesamt 180° geht mit einer Drehung des Werkzeugs 11 um 360° einher, sodass das Werkzeug 11 die in Fig. 1c gezeigte zentrierte Stellung einnimmt.

Weitere aufeinander abgestimmte Bewegungszustände zwischen Statorrohling 10 und dem exzentrisch bewegten Werkzeug 11 gehen aus Fig. 1d hervor. Fig. 1d zeigt, dass sich das Werkzeug 11 erneut weiterbewegt hat, was mit einer neuen Statorrohlingausrichtung einhergegangen ist.

Die rotierende Bewegung des Statorrohling 10 und die exzentrische Bewegung des Werkzeugs 11 sind dabei derart abgestimmt, dass bei Statorausrichtungen von 360°, d. h. bei einer vollständigen Drehung des Statorrohlings 10, das Werkzeug 11 innerhalb des Statorrohlings 10 zentrisch angeordnet ist, d. h. zwei vollständige exzentrische Drehungen von je 360° vollzogen hat.

Durch das Zusammenwirken der axialen Vorschubbewegung des Statorrohlings 10 sowie der rotierenden Statorbewegung um die Antriebwelle 12 und der exzentrischen Statorbewegung um die zweite Welle 13 bei einem gleichzeitig eingestellten Drehzahlverhältnis zwischen Statorrohling 10 und Lagerwelle 13 wird in dem Statorrohling 10 der zu dem schraubenförmigen Verlauf eines Rotors in einer Exzenterschneckenpumpe korrespondierende Hohlraum 14 gebildet.

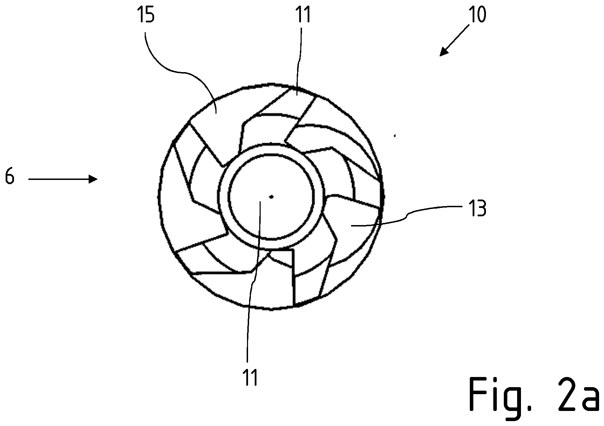

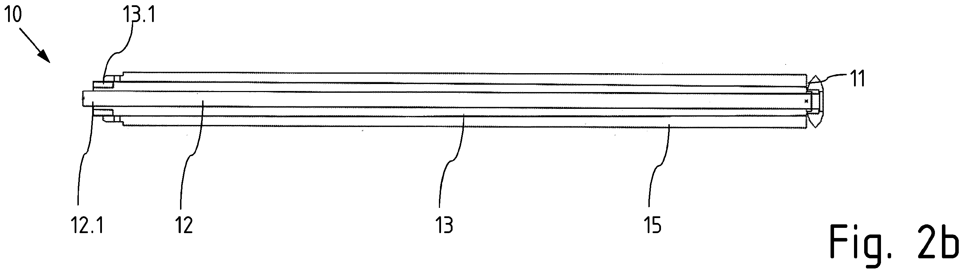

Figur 2 zeigt perspektivisch ein erstes Ausführungsbeispiel für die erfindungsgemäße Vorrichtung 1. Die Vorrichtung 1 umfasst die langgestreckt ausgebildete Außenwelle 15 mit einem rechts dargestellten Bearbeitungsende und einem links dargestellten Antriebsende, eine Lagerwelle 13, von der rechts das Bearbeitungsende und links ein Teil des Antriebsendes 13.1 zu sehen ist, und die Antriebswelle 12, von der links das Bearbeitungsende und rechts ein Teil des Antriebswellenendes 4.1 zu sehen ist, wobei an dem Bearbeitungsende der Lagerwelle 13 das Werkzeug drehfest angeordnet ist. Die Lagerwelle 13 ist formschlüssig und um ihre Längsachse drehbar in einer Bohrung in der Außenwelle 2 angeordnet, wobei die Längsachse der Lagerwelle 13 parallel und beabstandet zu der Längsachse der Außenwelle 15 angeordnet ist. Die Antriebswelle 12 ist formschlüssig und um ihre Längsachse drehbar in einer Bohrung in der Lagerwelle 13 angeordnet, wobei die Längsachse der Antriebswelle 12 so angeordnet ist, dass sie die Längsachse der Lagerwelle 13 schneidet.

Die rechts dargestellten Antriebsenden der Wellen 12, 13 und 15 sind zur Verbindung mit jeweils einem nicht gezeigten Antrieb ausgebildet, über den die jeweilige Welle in Drehung um ihre Längsachse versetzbar ist. Möglich ist aber auch, dass die Antriebs-enden der Wellen 12, 13 und 15 mit wenigstens einer nicht dargestellten Verlängerung verbunden werden, die drei entsprechend drehbare Wellen aufweist, wodurch die Länge der Vorrichtung 1 insgesamt verlängert werden könnte, um auch Hohlkörper mit größerer axialer Länge auf gewünschte Art und Weise bearbeiten zu können. Auf diese Weise kann die Länge der Vorrichtung 1 auf einfache Art an verschiedene Einsatzbedingungen angepasst werden. Die Antriebe werden dann entsprechend den vorhergehenden Ausführungen mit dem freien Ende der Wellen der letzten Verlängerung verbunden.

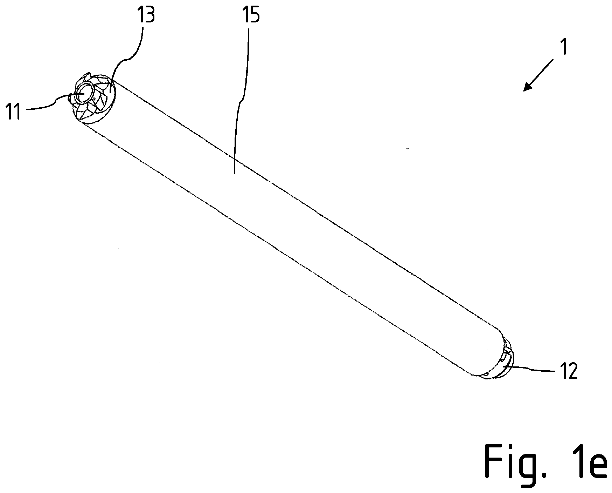

Figur 2a zeigt eine Stirnansicht der in Figur 1 gezeigten Vorrichtung 1 in einem ersten Bearbeitungszustand. Es ist insbesondere die dezentrale Anordnung der einzelnen Wellen 12, 13 und 15 relativ zueinander zu erkennen. Das als Fräswerkzeug ausgebildete Werkzeug 10 weist einen Wirkdurchmesser auf, der größer als der Außendurchmesser der Lagerwelle 13 ist. In der gezeigten Ausgangsstellung der Vorrichtung 1 ist die Rotationsachse des Werkzeugs 10 im Wesentlichen identisch mit der Längsachse der Außenwelle 15.

Figur 2b zeigt eine teilweise transparente Seitenansicht entsprechend dem in Figur 2a dargestellten Pfeil 6 der in Figur 1 gezeigten Vorrichtung 1 in der in Figur 2a dargestellten Bearbeitungsstellung. Hierdurch wird die Anordnung der Wellen 12, 13 und 15 relativ zueinander deutlicher. Zudem ist zu sehen, dass jeweils die Antriebswelle 12formschlüssig in der Lagerwelle 13 und die Lagerwelle 3 formschlüssig in der Außenwelle 15 aufgenommen ist.

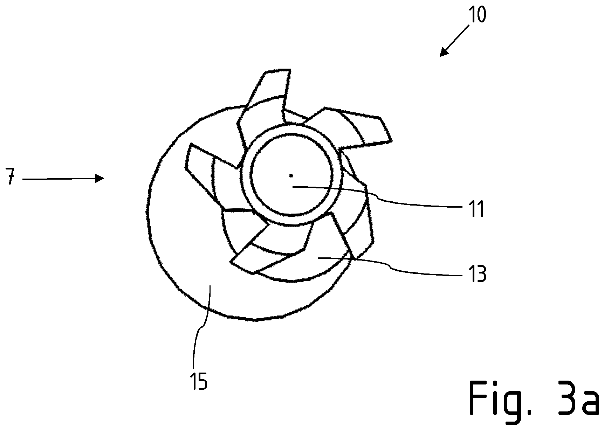

Figur 3a zeigt eine Stirnansicht der in Figur 1 gezeigten Vorrichtung 1 in einem zweiten Bearbeitungszustand, der aus dem in den Figuren 2a und 2b gezeigten ersten Bearbeitungszustand durch eine Drehung der Lagerwelle 3 um 90° im Uhrzeigersinn hervorgeht.

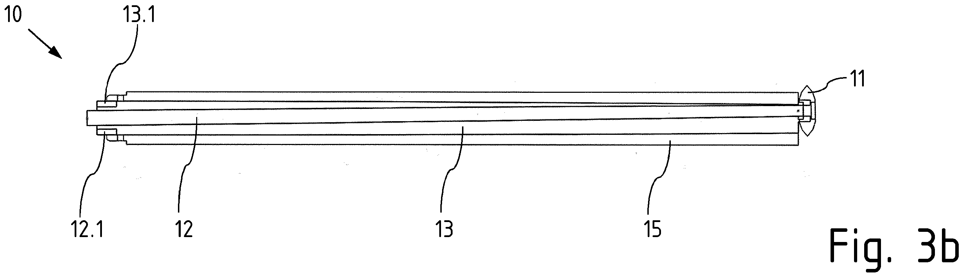

Figur 3b zeigt eine teilweise transparente Seitenansicht entsprechend dem in Figur 3a dargestellten Pfeil 7 der in Figur 1 gezeigten Vorrichtung 1 in der in Figur 3a dargestellten Bearbeitungsstellung. Hier ist zu sehen, dass die Antriebswelle 4 derart zu der Lagerwelle 3 angeordnet ist, dass sich ihre Längsachsen schneiden. Das links dargestellte Antriebsende der Antriebswelle 4 ragt mittig aus dem links dargestellten Antriebsende der Lagerwelle 3 heraus, während das rechts dargestellte Bearbeitungsende der Antriebswelle 4 außermittig aus dem rechts dargestellten Bearbeitungsende der Lagerwelle 3 herausragt.

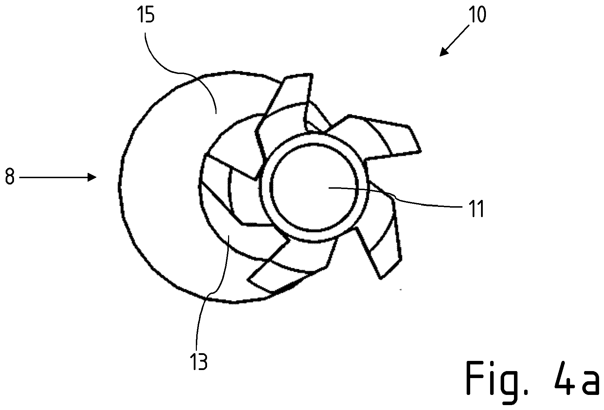

Figur 4a zeigt eine Stirnansicht der in Figur 1 gezeigten Vorrichtung 1 in einem dritten Bearbeitungszustand, der aus dem in den Figuren 3a und 3b gezeigten zweiten Bearbeitungszustand durch eine Drehung der Lagerwelle 3 um 90° im Uhrzeigersinn hervorgeht.

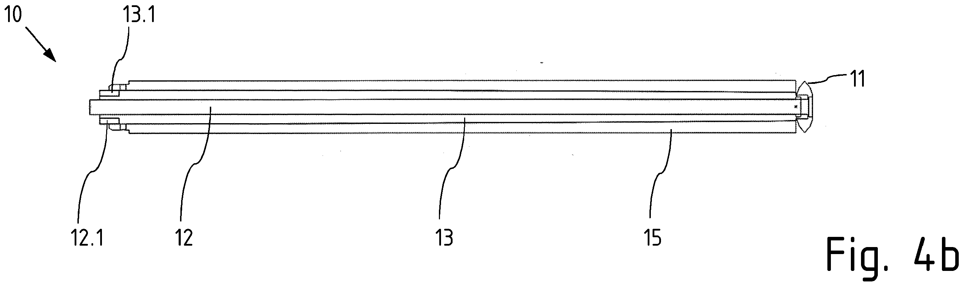

Figur 4b zeigt eine teilweise transparente Seitenansicht entsprechend dem in Figur 4a dargestellten Pfeil 8 der in Figur 1 gezeigten Vorrichtung 1 in der in Figur 4a dargestellten Bearbeitungsstellung. Die Seitenansicht entspricht der in Figur 1b gezeigten, da nicht erkennbar ist, dass die Antriebswelle 4 insbesondere an ihrem Bearbeitungsende weiter weg vom Betrachter angeordnet ist.

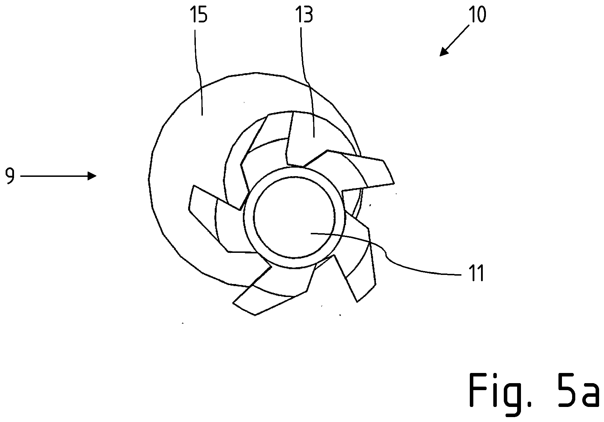

Figur 5a zeigt eine Stirnansicht der in Figur 1 gezeigten Vorrichtung 1 in einem vierten Bearbeitungszustand, der aus dem in den Figuren 4a und 4b gezeigten dritten Bearbeitungszustand durch eine Drehung der Lagerwelle 3 um 90° im Uhrzeigersinn hervorgeht.

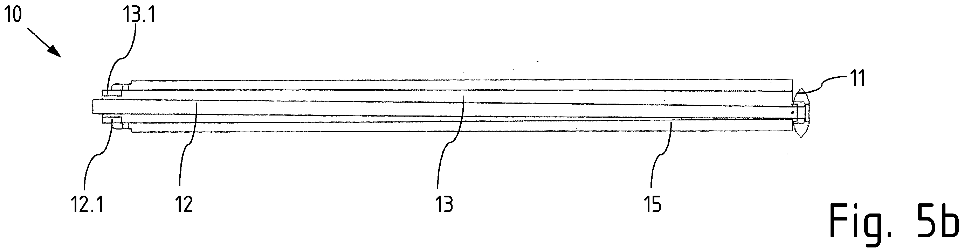

Figur 5b zeigt eine teilweise transparente Seitenansicht entsprechend dem in Figur 5a dargestellten Pfeil 9 der in Figur 1 gezeigten Vorrichtung 1 in der in Figur 5a dargestellten Bearbeitungsstellung. Figur 5b entspricht im Wesentlichen Figur 3b, jedoch ist die Lagerwelle 3 in einer um 180° gedrehten Stellung gezeigt, wodurch die Antriebswelle 4 und folglich das Bearbeitungswerkzeug 5 verlagert worden ist.

## Patentansprüche

1. Verfahren zur Herstellung eines Hohlraumes (14) in einem Stator einer Exzenterschneckenpumpe, bei dem mit einem Werkzeug (11) im Inneren eines Statorrohlings (10) Material abgetragen wird ,
**dadurch gekennzeichnet,**
- **dass** das Werkzeug (11) innerhalb des Hohlraumes (14) eine durch eine Antriebswelle (12) rotierende Bewegung sowie eine um eine Lagerwelle (13) rotierende, exzentrische Bewegung vollzieht, wobei der Statorrohling (10) und das Werkzeug (11) gegeneinander bewegt werden;
- **dass** der Statorrohling (10) eine rotierende Bewegung vollzieht;
- **dass** die Bewegungen innerhalb eines Führungsrohres (15) oder einer Lagerwelle (13) vollzogen werden;
- **dass** ein Drehzahlverhältnis zwischen Statorrohling (10) und Lagerwelle (13) eingestellt wird; und
- **dass** der Statorrohling (10) und/oder das Werkzeug (11) eine axiale Vorschubbewegung vollzieht.

2. Verfahren nach Anspruch 1, **dadurch gekennzeichnet, dass** das Werkzeug (11) während einer vollständigen Drehung des Statorrohlings (10) mindestens zwei vollständige exzentrische Bewegungen vollzieht.

3. Verfahren nach Anspruch 1 oder 2, **dadurch gekennzeichnet, dass** ein Führungsrohr (15) vorgesehen ist, das parallel zu der Lagerwelle(13) verläuft.

4. Verfahren nach einem der vorhergehenden Ansprüche, **dadurch gekennzeichnet, dass** das Werkzeug (11) in dem Statorrohling (10) entlang des Rohlings (10) geführt wird.

5. Verfahren nach einem der vorhergehenden Ansprüche, **dadurch gekennzeichnet, dass** die exzentrische Umdrehung des Werkzeugs (11) von einer Exzenterwelle angetrieben wird.

6. Verfahren nach einem der vorhergehenden Ansprüche, **dadurch gekennzeichnet, dass** die Antriebwelle (12) an einen ersten Antrieb gekoppelt wird.

7. Verfahren nach einem der vorhergehenden Ansprüche, **dadurch gekennzeichnet, dass** die Lagerwelle (13) an einen zweiten Antrieb gekoppelt wird.

8. Vorrichtung (1) zur Durchführung des Verfahrens gemäß einem der Ansprüche 1 bis 7 zur Herstellung eines Hohlraumes (14) in einem Statorrohling (20) für einen Stator einer Exzenterschneckenpumpe, wenigstens umfassend
- eine mit ihrem Antriebsende (13.1) an einen ersten Antrieb gekoppelte Lagerwelle (13), die mittels des ersten Antriebs um ihre Längsachse drehbar ist,
- eine mit ihrem Antriebsende (12.1) an einen zweiten Antrieb gekoppelte Antriebswelle (12), die mittels des zweiten Antriebs um ihre Längsachse formschlüssig und die relativ zu der Lagerwelle (13) drehbar in einer Bohrung der Lagerwelle (13) angeordnet ist,
- ein mit der Antriebswelle (12) verbundenes Werkzeug (11), welches drehfest mit dem in den Hohlraum (14) des Statorrohlings (10) einführbaren Bearbeitungsende der Antriebswelle (12) verbunden und über diese rotierend um die Längsachse der Antriebswelle (12) antreibbar ist,
- Mittel zur axialen Vorschubbewegung des Statorrohlings (10) gegenüber dem Werkzeug (11),
wobei die Längsachse der Lagerwelle (13) parallel und beabstandet zu der Längsachse der Außenwelle (15) angeordnet ist,
**dadurch gekennzeichnet, dass** die Längsachse der Antriebswelle (12) die Längsachse der Lagerwelle (13) in einem Punkt schneidend oder windschief zu der Längsachse der Lagerwelle (13) angeordnet ist.

9. Vorrichtung (1) nach Anspruch 8, **dadurch gekennzeichnet, dass** das Antriebsende (12.1) der Antriebswelle (12) mittig aus dem Antriebsende der Lagerwelle (13) und das Bearbeitungsende der Antriebswelle (12) außermittig aus dem in den Hohlkörper einführbaren Bearbeitungsende der Lagerwelle (13) herausragt.

10. Vorrichtung (1) nach Anspruch 8 oder 9, **dadurch gekennzeichnet, dass** die Antriebswelle (12) entlang ihrer Längsachse relativ zu der Lagerwelle (13) verstellbar angeordnet ist.

11. Vorrichtung (1) nach einem der Ansprüche 8 bis 10, **gekennzeichnet durch** eine Außenwelle (15), wobei die Lagerwelle (13) formschlüssig und um ihre Längsachse relativ zu der Außenwelle (15) drehbar in einer Bohrung in der Außenwelle (15) angeordnet ist.

12. Vorrichtung (1) nach Anspruch 11, **dadurch gekennzeichnet, dass** die Längsachse der Lagerwelle (13) parallel und beabstandet zu der Längsachse der Au-βenwelle (15) angeordnet ist, wobei die Außenwelle (15) mit ihrem Antriebsende an einen dritten Antrieb koppelbar ist, mit dem sie um ihre Längsachse drehbar ist.

13. Vorrichtung (1) nach einem der Ansprüche 8 bis 12, **dadurch gekennzeichnet, dass** das Werkzeug (11) ein Fräswerkzeug ist, dessen Wirkdurchmesser größer als der Außendurchmesser der Lagerwelle (13) ist.

## Claims

1. Method for producing a cavity (14) in a stator of a progressive cavity pump, in which material is removed by a tool (11) in the interior of a stator blank (10),
**characterized**
- **in that** the tool (11) inside the cavity (14) carries out a rotating movement brought about by a drive shaft (12) and an eccentric movement, rotating about a bearing shaft (13), wherein the stator blank (10) and the tool (11) are moved with respect to one another;
- **in that** the stator blank (10) carries out a rotating movement;
- **in that** the movements are carried out within a guide tube (15) or a bearing shaft (13);
- **in that** a speed ratio between the stator blank (10) and bearing shaft (13) is set; and
- **in that** the stator blank (10) and/or the tool (11) carries out an axial advancing movement.

2. Method according to Claim 1, **characterized in that** the tool (11) carries out at least two complete eccentric movements during a complete rotation of the stator blank (10).

3. Method according to Claim 1 or 2, **characterized in that** a guide tube (15) is provided which extends parallel to the bearing shaft (13).

4. Method according to one of the preceding claims, **characterized in that** the tool (11) is guided in the stator blank (10) along the blank (10).

5. Method according to one of the preceding claims, **characterized in that** the eccentric revolution of the tool (11) is driven by an eccentric shaft.

6. Method according to one of the preceding claims, **characterized in that** the drive shaft (12) is coupled to a first drive.

7. Method according to one of the preceding claims, **characterized in that** the bearing shaft (13) is coupled to a second drive.

8. Device (1) for carrying out the method according to one of Claims 1 to 7 for producing a cavity (14) in a stator blank (20) for a stator of a progressive cavity pump, at least comprising
- a bearing shaft (13) which is coupled by its drive end (13.1) to a first drive and is rotatable about its longitudinal axis by means of the first drive,
- a drive shaft (12) which is coupled by its drive end (12.1) to a second drive and is arranged in a bore of the bearing shaft (13) so as to be rotatable relative to the bearing shaft (13) and in a form-fitting manner about its longitudinal axis by means of the second drive,
- a tool (11) which is connected to the drive shaft (12) and is connected for conjoint rotation to the machining end, insertable into the cavity (14) of the stator blank (10), of the drive shaft (12) and able to be driven in rotation about the longitudinal axis of the drive shaft (12) thereby,
- means for the axial advancing movement of the stator blank (10) with respect to the tool (11),
wherein the longitudinal axis of the bearing shaft (13) is arranged parallel to and at a distance from the longitudinal axis of the outer shaft (15),
**characterized in that** the longitudinal axis of the drive shaft (12) is arranged so as to intersect the longitudinal axis of the bearing shaft (13) at a point or so as to be skew with respect to the longitudinal axis of the bearing shaft (13).

9. Device (1) according to Claim 8, **characterized in that** the drive end (12.1) of the drive shaft (12) projects centrally out of the drive end of the bearing shaft (13) and the machining end of the drive shaft (12) projects eccentrically out of the machining end, insertable into the cavity, of the bearing shaft (13).

10. Device (1) according to Claim 8 or 9, **characterized in that** the drive shaft (12) is arranged so as to be adjustable along its longitudinal axis relative to the bearing shaft (13).

11. Device (1) according to one of Claims 8 to 10, **characterized by** an outer shaft (15), wherein the bearing shaft (13) is arranged in a bore in the outer shaft (15) so as to be rotatable about its longitudinal axis relative to the outer shaft (15) and in a form-fitting manner.

12. Device (1) according to Claim 11, **characterized in that** the longitudinal axis of the bearing shaft (13) is arranged parallel to and at a distance from the longitudinal axis of the outer shaft (15), wherein the outer shaft (15) is able to be coupled by its drive end to a third drive with which it is rotatable about its longitudinal axis.

13. Device (1) according to one of Claims 8 to 12, **characterized in that** the tool (11) is a milling tool, the effective diameter of which is greater than the outside diameter of the bearing shaft (13).

## Revendications

1. Procédé de fabrication d'une cavité (14) dans un stator d'une pompe à vis excentrique, dans lequel, à l'aide d'un outil (11), de la matière est enlevée à l'intérieur d'une ébauche de stator (10),
**caractérisé**
- **en ce que** l'outil (11) effectue à l'intérieur de la cavité (14) un mouvement rotatif par le biais d'un arbre d'entraînement (12) ainsi qu'un mouvement excentrique rotatif autour d'un arbre de support (13), l'ébauche de stator (10) et l'outil (11) étant déplacés l'un par rapport à l'autre ;
- **en ce que** l'ébauche de stator (10) effectue un mouvement rotatif ;
- **en ce que** les mouvements sont effectués à l'intérieur d'un tube de guidage (15) ou d'un arbre de support (13) ;
- **en ce qu'**un rapport de vitesses de rotation entre l'ébauche de stator (10) et l'arbre de support (13) est réglé ; et
- **en ce que** l'ébauche de stator (10) et/ou l'outil (11) effectuent un mouvement d'avance axial.

2. Procédé selon la revendication 1, **caractérisé en ce que** l'outil (11) effectue au moins deux mouvements excentriques complets pendant une rotation complète de l'ébauche de stator (10).

3. Procédé selon la revendication 1 ou 2, **caractérisé en ce qu'**un tube de guidage (15) est prévu, qui s'étend parallèlement à l'arbre de support (13).

4. Procédé selon l'une des revendications précédentes, **caractérisé en ce que** l'outil (11) est guidé dans l'ébauche de stator (10) le long de l'ébauche (10).

5. Procédé selon l'une des revendications précédentes, **caractérisé en ce que** la révolution excentrique de l'outil (11) est entraînée par un arbre excentrique.

6. Procédé selon l'une des revendications précédentes, **caractérisé en ce que** l'arbre d'entraînement (12) est accouplé à un premier entraînement.

7. Procédé selon l'une des revendications précédentes, **caractérisé en ce que** l'arbre de support (13) est accouplé à un deuxième entraînement.

8. Dispositif (1) permettant de mettre en œuvre le procédé selon l'une des revendications 1 à 7 pour la réalisation d'une cavité (14) dans une ébauche de stator (20) pour un stator d'une pompe à vis excentrique, comportant au moins
- un arbre de support (13) accouplé par son extrémité d'entraînement (13.1) à un premier entraînement, lequel arbre peut être entraîné en rotation autour de son axe longitudinal au moyen du premier entraînement,
- un arbre d'entraînement (12) accouplé par son extrémité d'entraînement (12.1) à un deuxième entraînement, lequel arbre d'entraînement est disposé avec complémentarité de formes autour de son axe longitudinal au moyen du deuxième entraînement et de manière à pouvoir tourner par rapport à l'arbre de support (13) dans un alésage de l'arbre de support (13),
- un outil (11) relié à l'arbre d'entraînement (12), lequel outil est relié de manière solidaire en rotation à l'extrémité d'usinage, pouvant être insérée dans la cavité (14) de l'ébauche de stator (10), de l'arbre d'entraînement (12) et peut être entraîné en rotation par le biais de celui-ci autour de l'axe longitudinal de l'arbre d'entraînement (12),
- des moyens pour le mouvement d'avance axial de l'ébauche de stator (10) par rapport à l'outil (11), l'axe longitudinal de l'arbre de support (13) étant disposé parallèlement à l'axe longitudinal de l'arbre extérieur (15) et de manière espacée de cet axe longitudinal,
**caractérisé en ce que** l'axe longitudinal de l'arbre d'entraînement (12) est disposé de manière à croiser l'axe longitudinal de l'arbre de support (13) en un point ou de manière gauche par rapport à l'axe longitudinal de l'arbre de support (13).

9. Dispositif (1) selon la revendication 8, **caractérisé en ce que** l'extrémité d'entraînement (12.1) de l'arbre d'entraînement (12) fait saillie centralement hors de l'extrémité d'entraînement de l'arbre de support (13) et l'extrémité d'usinage de l'arbre d'entraînement (12) fait saillie de manière excentrique hors de l'extrémité d'usinage de l'arbre de support (13) pouvant être insérée dans le corps creux.

10. Dispositif (1) selon la revendication 8 ou 9, **caractérisé en ce que** l'arbre d'entraînement (12) est disposé de manière ajustable par rapport à l'arbre de support (13) le long de son axe longitudinal.

11. Dispositif (1) selon l'une des revendications 8 à 10, **caractérisé par** un arbre extérieur (15), l'arbre de support (13) étant disposé dans un alésage dans l'arbre extérieur (15) avec complémentarité de formes et de manière à pouvoir tourner autour de son axe longitudinal par rapport à l'arbre extérieur (15).

12. Dispositif (1) selon la revendication 11, **caractérisé en ce que** l'axe longitudinal de l'arbre de support (13) est disposé parallèlement à l'axe longitudinal de l'arbre extérieur (15) et de manière espacée de cet axe longitudinal, l'arbre extérieur (15) pouvant être accouplé, par son extrémité d'entraînement, à un troisième entraînement à l'aide duquel il peut tourner autour de son axe longitudinal.

13. Dispositif (1) selon l'une des revendications 8 à 12, **caractérisé en ce que** l'outil (11) est un outil de fraisage dont le diamètre effectif est supérieur au diamètre extérieur de l'arbre de support (13).
